Europäisches Patentamt

European Patent Office

Office européen des brevets

(11) Publication number: **0 071 362**
**B1**

(12) **EUROPEAN PATENT SPECIFICATION**

(45) Date of publication of patent specification: **02.10.85**

(21) Application number: **82303681.9**

(22) Date of filing: **13.07.82**

(51) Int. Cl.⁴: **F 16 D 23/06**

(54) Synchronizer spring pin.

(30) Priority: **31.07.81 US 288723**
**31.07.81 US 288724**

(43) Date of publication of application:
**09.02.83 Bulletin 83/06**

(45) Publication of the grant of the patent:
**02.10.85 Bulletin 85/40**

(84) Designated Contracting States:
**DE FR GB IT**

(56) References cited:
**GB-A- 523 246**
**US-A-2 667 955**
**US-A-2 814 373**
**US-A-4 125 179**

(73) Proprietor: **EATON CORPORATION**
**100 Erieview Plaza**
**Cleveland Ohio 44114 (US)**

(72) Inventor: **Morscheck, Timothy John**
**5317 Burning Tree**
**Kalamazoo Michigan 49009 (US)**
Inventor: **Byar, Robert Russell**
**152 Steerbridge**
**Medina Ohio 44256 (US)**
Inventor: **Deska, Theodore James**
**11440 Briarcliff Drive**
**Warren Michigan 48093 (US)**

(74) Representative: **Douglas, John Andrew**
**Eaton House Staines Road**
**Hounslow Middlesex TW4 5DX (GB)**

Courier Press, Leamington Spa, England.

## Description

The invention relates to a clutch having jaw clutch members and friction means to synchronize the jaw clutch members and to engage blockers to prevent asynchronous engagement of the jaw clutch members prior to synchronization. Specifically, the invention relates to spring pins for initially engaging the friction means in response to incipient engaging movement of one of the jaw clutch members.

Clutches of the above type are well-known and are commonly referred to as synchronizers or synchronizer clutches. Many synchronizer clutches include a friction clutch(es) to synchronize the jaw clutch members, blockers to prevent contact or engagement of the jaw clutch members prior to synchronization, and springs or (as herein) spring pins. The spring pins effect engagement of the blockers by initially moving the friction clutch into engagement with a relatively low force in response to incipient engaging movement of one of the jaw clutch members. One species of such synchronizer clutches are the double acting synchronizer clutches disclosed in US—A—2,667,955 and US—A—4,125,179 respectively. The first Bixby patent discloses spring pins which each consist of a pair of rigid semicylindrical members biased apart by a spring disposed in a cavity defined by the rigid members. The spring pins of Bixby are believed to be rather expensive relative to the spring pins disclosed herein. The second Cochran patent discloses compressible C-sectioned, nearly cylindrical spring pins. The spring pins of Cochran are believed to be substantially less expensive to produce than the spring pins of Bixby. However, the spring pins of Cochran are also believed to be subjected to rather high stresses when the pins compress to close the longitudinal gap, having to reduce their circumferences right along their lengths; i.e., when the pins flex radially inward. More specifically, US—A—4125179 comprises:—

A spring means for a double-acting synchronizer clutch of the type including two axially moveable friction rings rigidly connected together about a common rotational axis in axially spaced relation on opposite sides of an axially moveable, radially extending flange having a plurality of circumferentially spaced openings each slidably receiving a detent groove defined by a spring pin when the flange is axially positioned in a neutral position between the friction rings; the spring pin having opposite ends in abutting relation with the axially moveable friction rings; the spring pin being operative in response to axial movement of the flange along the common axis to resiliently move the friction rings in the direction of the movement into frictional engagement with a mating friction ring; and the opposite spring pin ends being joined together by at least two beams adapted to extend through one of the flange openings, said beams having radially inwardly pinched portions at a position between said spring pin ends to define the detent groove.

The present invention is based on the appreciation that proposal in US—A—4125179 of providing rigid beams joining the ends of the pin together and relying on the closing of a C-section, i.e. reduction of circumference to provide the resilient or spring action, produces large stresses. Also, that the spring rate does not increase smoothly enough with the incipient clutch engagement, even with the punched indentation shapes proposed for the spring pin of US—A—4125179. Accordingly, the present invention discloses longitudinal spring beams instead, and a measure of radial strengthening at the pin ends. More specifically, this invention is, characterized in that the at least two beams are beam springs bowed radially outward from each other in barrel stave fashion, and in that the spring pin further includes means to prevent radial flexing of said spring pin ends. Further embodiments of the invention are disclosed in the dependent claims.

A synchronizer clutch with the spring pins of the instant invention is shown in the accompanying drawings in which:

Figure 1 is a vertically sectioned view of a double acting synchronizer clutch with one of the spring and blocker pins shown in relief;

Figure 2 is a somewhat enlarged, exploded view of the spring pin in Figure 1 with a portion thereof in section;

Figure 3 is a sectioned view of the synchronizer clutch looking along line 3—3 of Figure 1;

Figure 4 is a vertically sectioned view of a portion of the spring pin in Figures 1 and 2; and

Figures 5 and 6 are alternative embodiments of the spring pin.

Certain terminology referring to specific types of components, direction, motion, and the relationship of components to each other will be used in the following description. This terminology is for convenience in describing the invention and its environment and should not be considered limiting unless explicitly used in the appended claims.

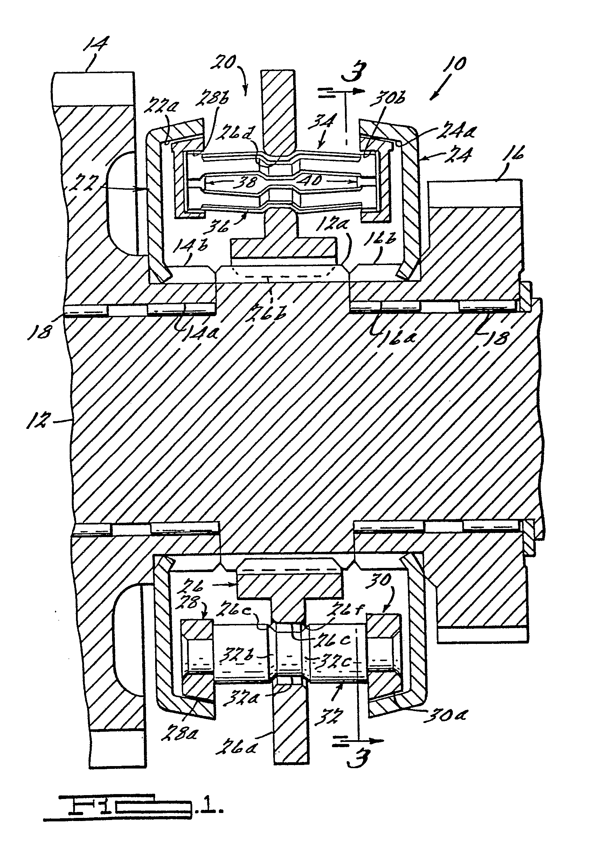

Looking first at Figure 1, therein is shown a portion 10 of an otherwise unshown transmission adapted for use in an unshown land vehicle, but not limited to such use. Portion 10 includes a shaft 12 mounted for rotation, spaced apart gears 14 and 16 rotationally supported on the shaft by roller bearings 18, and a double acting synchronizer clutch assembly 20 for selectively coupling either gear to the shaft. When portion 10 is in the unshown transmission, gears 14 and 16 will be in constant mesh with gears which may drive or be driven by gears 14 and 16.

Synchronizer clutch assembly 20 includes jaw clutch members 14a and 16a having external spline shaped jaw teeth 14b and 16b formed on annular hub extensions of the gears, friction rings 22 and 24 rotatably fixed to gears 14 and 16 respectively by splines 14b and 16b and having ring or cone friction surfaces 22a and 24a, a slidable positive type jaw clutch member 26 having a radially outwardly extending flange portion 26a, friction rings 28 and 30 having ring or cone friction surfaces 28a and 30a, a plurality of (herein three) blocker pins 32 rigidly connecting rings 28 and 30 together for rotation above a common axis defined by shaft 12, and a plurality of (herein three) spring pins 34. The outer periphery of flange 26a is gripped by an unshown and conventional shift fork moved right or left to respectively effect coupling of gear 16 or 14 to shaft 12.

Jaw clutch member 26 includes internal spline shaped jaw clutch jaw teeth 26b slidably engaged with splines 12a defined by shaft 12, a first set of three circumferentially spaced openings 26c having blocker pins 32 slidably extending therethrough, and a second set of three openings 26d circumferentially spaced between openings 26c and slidably receiving spring pins 34. Openings 26d are are preferably rounded as shown to negate sharp edge contact with the associated spring pins. However, the opening may be chamfered. Blocker pins 32 include a reduced diameter portion or groove 32a spaced (herein midway) between rings 28 and 30. Each reduced diameter portion when aligned with its respective opening 26c, allows limited rotation of jaw clutch member 26 relative to friction rings 28 and 30. The reduced diameter portion also defines beveled blocking shoulders 32b and 32c which cooperate with chamfered shoulders 26e and 26f when the reduced diameter portion moves out of concentric alignment with its respective opening to allow the limited relative rotation between jaw clutch member 26 and friction rings 28 and 29.

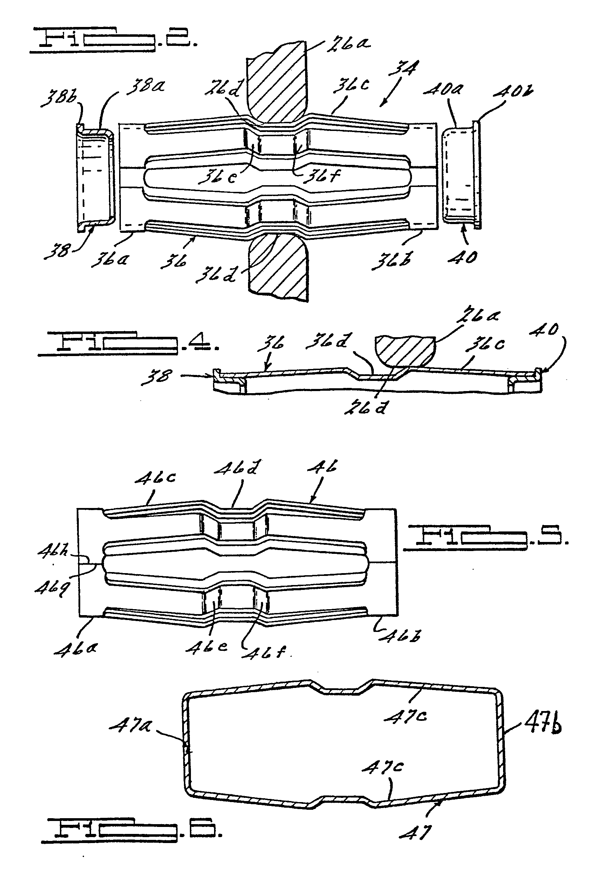

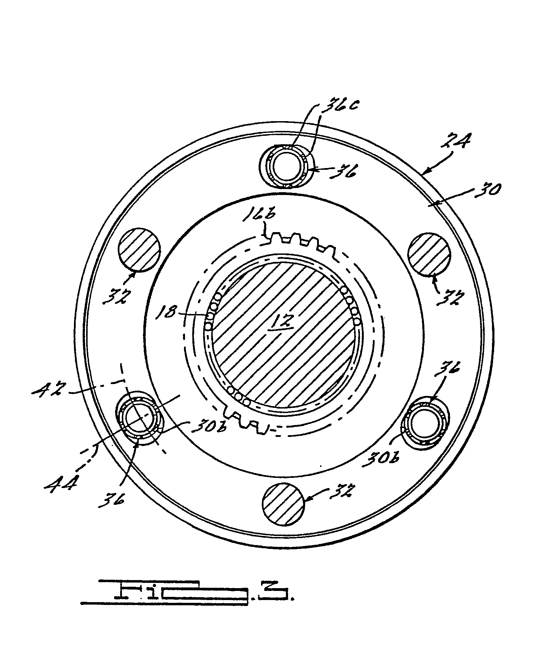

Looking now at Figures 1—3, spring pin 34 includes a unitary member 36 and end caps or closed rings 38 and 40. Member 36 includes split end rings 36a and 36b and a plurality of (herein six) beam or spring leafs 36c. The leafs are disposed generally parallel to and circumferentially spaced about the longitudinal axis of the pin, are bowed radially outward in barrel stave fashion, and are pinched radially inward toward each other at a position (herein midway) between the split ends. The pinched portions of the leafs collectively define an annular detent groove 36d having beveled shoulders 36e and 36f which provide a neutral position for flange 26a of jaw clutch member 26. The minimum diameter of groove 36d is slightly less than the inside diameter of openings 26d and the maximum diameter of beveled shoulders 36e and 36f is greater than the minimum diameters of openings 26d. The width of spring pin groove 36d is less than the width of blocker pin grooves 32a so that the spring pin shoulders 36e and 36f will make contact with flange 26a before the blocker pin shoulders 32b and 32c. Closed rings 38 and 40 respectively include a cylindrical portion 38a and 40a and a radially outwardly extending flange portion 38b and 40b. The cylindrical portions prevent radial flexing or compressing of split end rings 36a and 36b. The flange portions provide the spring pins with an increased surface or load bearing surface to prevent or reduce wear of the associated portions of friction rings 28 and 30 contacted thereby. Figure 4 shows one leaf 36c of the spring pin in cross section with opening 26d of the flange moved rightward out of detent groove 36d.

The split end rings and closed rings of both ends of the spring pins are received by identical elongated, arcuate recesses or blind openings 28b and 30b in the mutually facing sides of friction rings 28 and 30. Looking at one of the recesses 30b in ring 30 of Figure 3, the recess includes a curved major extent 42 which coincides with an arc of a circle drawn from the rotational axis of shaft 12 and a minor extent 44 which coincides with a radius of the circle and bisects the major extent. The shoulders defining the minor extent or radial width of each recess are slightly wider than the diameter of the spring pin ends and provide radial support to hold friction rings 28 and 30 relatively concentric with mating friction rings 22 and 24. The major extent of each recess allows the previously mentioned limited relative rotation between flange 26a and friction rings 28 and 30 without side loading of the spring pins in openings 26d. Such side loading would cause a counter or unblocking torque which in some cases could entirely prevent effective blocking action by blocker pins 32 and at least cause premature unblocking of the blocker pins.

Recesses 28b and 30b may be elongated slots with the major extent thereof straight and substantially tangent to the circle drawn to the rotational axis of shaft 12. However, in this case the minor extent of the slots is preferably wide enough to allow arcuate movement of the spring pin ends in the slots without side loading.

Operation

When flange 26a is in the neutral position of Figure 1, the associated cone surfaces of the friction rings are slightly spaced apart, spring pins 36 are substantially concentric with openings 26d in the flange, and the reduced diameter portions 32a of the blocker pins are aligned with their respective openings 26c but are not necessarily concentric with openings 26c. When it is desired to couple either gear to shaft 12, an appropriate shift mechanism connected to flange 26a via the unshown shift fork moves the flange axially along the axis of shaft 12 either left to couple gear 14 or right to couple gear 16. Incipient movement of the flange is transmitted from the rounded shoulders of openings 26d to the beveled shoulders defined by the leaf springs and to the appropriate friction ring to effect initial frictional engagement of the friction ring with the mating friction ring. The force of the initial engagement is determined by the spring rate of spring leafs 36c which bend radially inward. The initial engagement (provided the gear to be coupled is not synchronous with shaft 12) ensures limited relative rotation between flange 26a and the engaged friction ring and hence movement of the reduced diameter portion of the blocker pins to the appropriate side of openings 26c to provide blocking by engagement or contact of the beveled shoulders defined by the blocker pins and the chamfered shoulders of openings 26c. When the blockers are engaged, the full axial force on flange 26a is transmitted to the beveled shoulders of the blocking pins. The full axial force increases the frictional engagement for increasing synchronizing torque between the gear and shaft and imparts an unblocking torque between the flange and blocker pins. During conditions of substantial nonsynchronous rotation, the unblocking torque is less than the synchronizing torque due to the self-engaging characteristics of the cone surface and due to the angular relationship between the chamfered and beveled shoulders. As substantial synchronism is reached, the synchronizing torque drops below the unblocking torque, whereby the blocker pins move into a concentric relationship with opening 26c and allow continued axial movement of the flange and engagement of the jaw clutch members.

Looking now at the alternative embodiment of spring pin 46 in Figure 5, spring pin 46 is substantially the same as the unitary member 36. That is, spring pin 46 is a unitary member including split end rings 46a and 46b and a plurality of (herein six) spring leafs 46c. Leafs 46c are bowed radially outward in barrel stave fashion and pinched radially inward toward each other at a position (herein midway) between the split ends. The pinched portions of the leafs collectively defined an annular detent groove 46d having beveled shoulders 46e and 46f which provide or define a neutral position for flange 26a of the jaw clutch member 26. Spring pin 46 differs from spring pin 34 by omitting the closed rings and by extending the adjacent ends 46g and 46h of the split ends so that they are in abutting contact to prevent radial flexing of the split ring. The adjacent ends could also be welded together or secured together by other means.

The alternative spring pin 47 of Figure 6 is formed from an elongated strip of spring steel having abutting ends 47a and two spring leafs 47c diametrically across from each other and of substantially the same shape as spring leafs 36c and 46c.

Three embodiments of the instant invention have been disclosed for illustrative purposes. Many variations and modifications of the disclosed embodiments are believed to be within the spirit of the invention. For example, the unitary sheet metal spring members disclosed herein may be formed from other materials such as wire. The following claims are intended to cover the inventive portions of the disclosed embodiments and variations and modifications believed to be within the spirit of the invention.

**Claims**

1. A spring means for a double-acting synchronizer clutch (20) of the type including two axially moveable friction rings (28, 30) rigidly connected together about a common rotational axis in axially spaced relation on opposite sides of an axially moveable, radially extending flange (26a) having a plurality of circumferentially spaced openings (26d) each slidably receiving a detent groove (36d, 46d) defined by a spring pin (34, 46, 47) when the flange is axially positioned in a neutral position between the friction rings; the spring pin having opposite ends (36a, 36b; 46a, 46b; 47a, 47b) in abutting relation with the axially moveable friction rings; the spring pin being operative in response to axial movement of the flange along the common axis to resiliently move the friction rings in the direction of the movement into frictional engagement with a mating friction ring (22, 24); and the opposite spring pin ends being joined together by at least two beams (36c, 46c, 47c) adapted to extend through one of the flange openings, said beams having radially inwardly pinched portions at a position between said spring pin ends to define the detent groove (36d, 46d), characterized in that the at least two beams are beam springs (36c, 46c, 47c) bowed radially outward from each other in barrel stave fashion, and in that the spring pin (34, 46, 47) further includes means (38, 40; 46h, 46g; 47a, 47b) to prevent radial flexing of said spring pin ends (36a, 36b; 46a, 46b; 47a, 47b).

2. The spring means according to Claim 1 characterized in that the spring pin includes
a unitary sheet metal member (36, 46, 47) defining said spring pin ends and said beam springs, said beam springs being leaf springs extending from said ends.

3. The spring means according to Claim 1 or 2, characterized in that
said spring pin ends being C-shaped rings and said beam springs extending between said C-shaped rings.

4. The spring means according to Claim 1, 2 or 3, characterized in that said spring pin includes six circumferentially disposed leaf springs.

5. The spring means according to Claim 3 or 4, characterized in that
a substantially nonflexible ring (38, 40) is snugly received in each C-shaped ring to prevent radial flexing of each C-shaped ring.

6. The spring means according to Claim 5, characterized in that the nonflexible ring includes a radially extending flange portion (38b, 40b).

**Patentansprüche**

1. Federmittel für eine doppelt wirkende Synchronisierkupplung (20) der Bauart mit zwei axial beweglichen Reibungsringen (28, 30), starr miteinander verbunden um eine gemeinsame Drehachse in axialer Abstandsbeziehung auf entgegengesetzten Seiten eines axial beweglichen, sich radial erstreckenden Flansches (26a) mit einer Vielzahl von umfangsmäßig mit Abstand angeordneten Öffnungen (26d), deren jede gleitend eine Rastnut (36d, 46d), definiert durch einen Federstift (34, 46, 47), aufnimmt, wenn der Flansch axial in einer Neutralposition zwischen den Reibungsringen positioniert ist, wobei der Federstift infolge der Axialbewegung des Flanches längs der gemeinsamen Achse betätigbar ist, um die Reibungsringe in Richtung der Bewegung in Reibungseingriff mit einem zusammenpasssenden Reibungsring (22, 24) zu bewegen, und wobei die entgegengesetzten Federstiftenden miteinander durch mindestens zwei Arme (36c, 46c, 47c) verbunden sind, die dazu geeignet sind, sich durch eine der Flanschöffnungen zu erstrecken, und wobei die Arme radial nach innen geklemmte Teile aufweisen, und zwar an einer Position zwischen den Federstiftenden zur Definition der Rastnut (36d, 46d), dadurch gekennzeichnet, daß mindestens zwei Arme Stabfedern (36c, 46c, 47c) sind, die faßdaubenartig radial nach außen voneinander gebogen sind, und daß der Federstift (34, 46, 47) ferner Mittel (38, 40; 46h, 46g; 47a, 47b) aufweist, um das radiale Biegen der Federstiftenden (36a, 36b; 46a, 46b; 47a, 47b) zu verhindern.

2. Federmittel nach Anspruch 1, dadurch gekennzeichnet, daß der Federstift ein einteiliges Blechglied (36, 46, 47) aufweist, welches die Federstiftenden und die Stabfedern definiert, und wobei die Stabfedern sich von den Enden aus erstreckende Blattfedern sind.

3. Federmittel nach Anspruch 1 oder 2, dadurch gekennzeichnet, daß die Federstiftenden C-förmige Ringe sind, und daß die Stabfedern sich zwischen den C-förmigen Ringen erstrecken.

4. Federmittel nach Anspruch 1, 2 oder 3, dadurch gekennzeichnet, daß der Federstift sechs umfangsmäßig angeordnete Blattfedern aufweist.

5. Federmittel nach Anspruch 3 oder 4, dadurch gekennzeichnet, daß ein im wesentlichen nicht flexibler Ring (38, 40) eng passend in jedem C-förmigen Ring aufgenommen ist, um das radiale Biegen jedes C-förmigen Rings zu verhindern.

6. Federmittel nach Anspruch 5, dadurch gekennzeichnet, daß der nicht flexible Ring einen sich radial erstreckkenden Flanschteil (38b, 40b) aufweist.

## Revendications

1. Un moyen élastique pour un embrayage (20) à synchroniseur à double effet du type comprenant deux bagues de friction (28, 30) axialement mobiles rigidement assemblées entre elles autour d'un axe de rotation commun dans une disposition axialement espacée sur les côtés opposés d'une collerette (26a) s'étendant radialement axialement mobile qui comporte plusieurs ouvertures (26d) circonférentiellement espacées dont chacune reçoit à coulissement une rainure de positionnement (36d, 46d) formées dans une goupille élastique (34, 46, 47) lorsque la collerette est axialement positionnée dans une position neutre entre les bagues de friction; la goupille élastique ayant des extrémités opposées (36a, 36b; 46a, 46b; 47a, 47b) dans une disposition de butée contre les bagues de friction axialement mobile; la goupille élastique servant, en réponse à un mouvement axial de la collerette le long de l'axe commun, à déplacer élastiquement les bagues de friction dans le sens du déplacement en appui de frottement contre une bague de friction coopérante (22, 24); et les extrémités opposées de la goupille élastique étant jointes entre elles par au moins deux poutres (36c, 46c, 47c) agencées de manière à s'étendre à travers l'une des ouvertures de la collerette, les poutres comportant des parties resserrées vers l'intérieure dans un emplacement situé entre les extrémités de la goupille élastique pour former la rainure de position (36d, 46d) caractérisé en ce qu'au moins deux poutres sont des ressorts formant poutre (36c, 46c, 47c) incurvés radialement vers l'extérieure en éloignement l'un de l'autre à la manière des douves d'un tonneau et en ce que la goupille élastique (34, 46, 47) comporte, en outre, des moyens (38, 40; 46h, 46g; 47a, 47b) pour empêcher la flexion radiale desdites extrémités (36a, 36b; 46a, 46b; 47a, 47b) de la goupille élastique.

2. Le moyen élastique selon la revendication 1, caractérisé en ce que la goupille élastique est constituée par un élément en tôle métallique en une seule pièce (36, 46, 47) qui forme lesdites extrémités de la goupille élastique et lesdits ressorts formant poutre, lesdits ressorts formant poutre étant des lames-ressorts qui s'étendent à partir desdites extrémités.

3. Le moyen élastique selon la revendication 1 ou 2, caractérisé en ce que lesdites extrémités des goupilles sont des bagues en forme de C et lesdits ressorts formant poutre s'étendent entre les bagues en forme de C.

4. Le moyen élastique selon la revendication 1, 2 ou 3, caractérisé en ce que ladite goupille élastique comporte six lames-ressorts disposées circonférentiellement.

5. Le moyen élastique selon la revendication 3 ou 4, caractérisé en ce qu'une bague (38, 40) essentiellement inflexible est reçue dans chaque bague en forme de C pour empêcher la flexion radiale de chaque bague en forme de C.

6. Le moyen élastique selon la revendication 5, caractérisé en ce que la bague inflexible comprend une partie de rebord (38b, 40b) s'étendant radialement.

FIG.1.

Fig.2.

Fig.4.

Fig.3.

Fig.6.

FIG.3.